# EUROPÄISCHE PATENTSCHRIFT

(11) **EP 0 451 658 B1**
(45) Veröffentlichungstag und Bekanntmachung des Hinweises auf die Patenterteilung: **19.01.1994**
(21) Anmeldenummer: 91105125.8
(22) Anmeldetag: 30.03.1991
(51) Int. Cl.: B60R 19/18

(54) **Biegefestes Bauteil**
Deflection resistant construction element
Elément de construction résistant à la flexion

(30) Priorität: 10.04.1990 DE 9004148 U
(43) Veröffentlichungstag der Anmeldung: 16.10.1991
(73) Patentinhaber: BASF Aktiengesellschaft, 67063 Ludwigshafen (DE)
(72) Erfinder: Lenz, Werner, W-6700 Ludwigshafen (DE); Pirker, Alfred, W-6710 Frankenthal (DE); Seib, Wolfgang, W-6701 Dannstadt-Schauernheim (DE)

(56) Entgegenhaltungen:
- EP-A- 0 256 174
- DE-U- 8 902 553
- GB-A- 2 197 618
- PATENT ABSTRACTS OF JAPAN, Band 14, Nr. 164 (M-957)[4107], 30. März 1990;& JP-A-2 24 240 (DAIKYO K.K.) 26-01-1990
- PATENT ABSTRACTS OF JAPAN, Band 14, Nr. 164 (M-957)[4107], 30. März 1990;& JP-A-2 42 239 (DAIKYO K.K.) 26-01-1990

## Beschreibung

Die Erfindung betrifft ein biegefestes Bauteil aus Kunststoff, bestehend aus einem langgestreckten Körper offenen Querschnittprofils, dessen Ränder an den die offene Seite des Körpers bildenden Flanschen mit Randversteifungen versehen sind.

Ein derartiges Bauteil ist aus dem DE-U-89 02 553 bekannt.

Bauteile der vorstehend genannten Art weisen häufig ein U-förmiges Querschnittsprofil auf und dienen gewöhnlich als Träger für die verschiedensten Aufgaben, beispielsweise für Stoßfänger im Automobilbau. Bekanntlich sind die Schubsteifigkeit bzw. der Wölbwiderstand und die kritische Beullast der einfacher zu fertigenden offenen Profile niedriger als bei den schwieriger zu fertigenden geschlossenen Profilen. Dabei ist die kritische Beullast der zum Einsatz kommenden Kunststoffe niedriger anzusetzen, weil die üblichen Metalle einen vergleichsweise höheren Elastizitätsmodul besitzen.

Bekannte Möglichkeiten, die Schubsteifigkeit bzw. den Wölbwiderstand und die kritische Beullast von solchen Bauteilen zu erhöhen, sind größere Wanddicken oder Verstärkungsrippen vorzusehen. Diese Maßnahmen haben jedoch den Nachteil, daß sie einer Leichtbauweise entgegenstehen und eine aufwendigere Herstellung erfordern.

Es war daher die Aufgabe zu lösen, ein biegefestes Bauteil aus Kunststoff zu entwickeln, das bei Leichtbauweise in der Schubsteifigkeit bzw. im Wölbwiderstand den bekannten Bauteilen überlegen ist.

Die Aufgabe wurde durch ein Bauteil der eingangs beschriebenen Form gelöst, bei dem erfindungsgemäß die Flansche des Körpers in den unter Belastung zu Beulen oder zum Verwölben neigenden Bereichen durch Platten oder Schalen versteift sind, die mittels Abstandselementen mit den Flanschen verbunden sind.

Die Erfindung ist anhand eines in der Zeichnung schematisch dargestellten Ausführungsbeispiels nachfolgend näher beschrieben.

Es zeigen
- Figur 1: das Bauteil (teilweise) im Längsschnitt, halbseitig, mit Versteifungsplatten und Abstandsrippen
- Figuren 2-4: das Bauteil im Querschnitt, mit Versteifungsplatten und verschiedenen Abstandselementen.

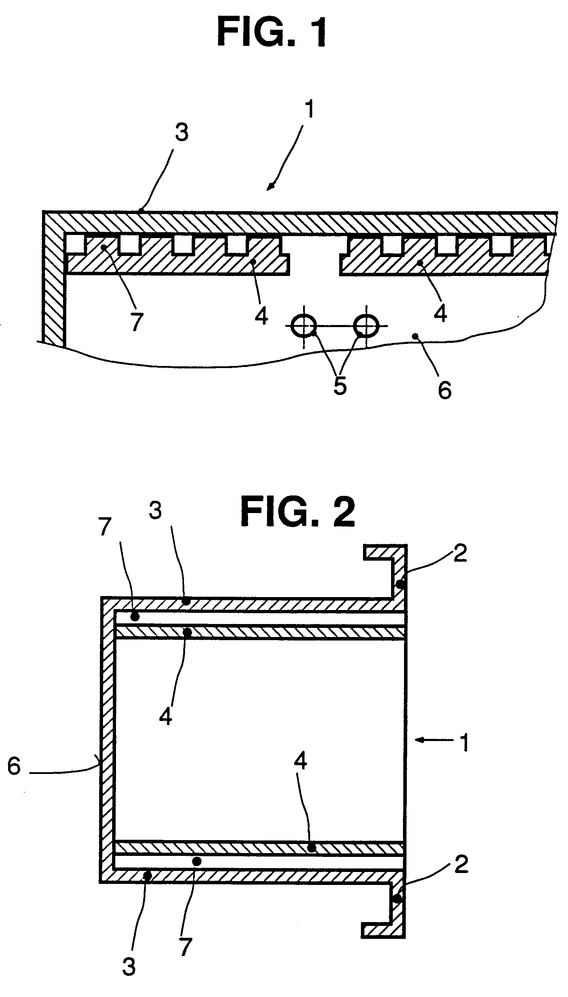

Das Bauteil besteht aus einem langgestreckten Körper 1 aus Kunststoff, vorzugsweise aus modifizierten Thermoplasten wie PP, PBT, PA und deren Legierungen, UP-Werkstoffen und Polyurethanen, mit offenem Querschnittsprofil, im vorliegenden Ausführungsbeispiel mit einem U-Profil (Figuren 2-4). Der Rand 2 ist an der offenen Seite des Körpers zur Versteifung ein- oder zweifach abgewinkelt.

Die Flansche 3 des Körpers sind zur Erhöhung dessen Schubsteifigkeit bzw. Wölbwiderstands in den Bereichen, in denen diese unter Belastung zu Beulen oder zum Verwölben neigen, durch dünnwandige Platten oder Schalen 4 verstärkt. Bei einem Stoßfänger sind dies die Bereiche zwischen den Befestigungsstellen 5 und außerhalb davon. Die Platten bzw. Schalen 4 sind mit dem Steg 6 und mittels Abstandselementen mit den Flanschen 3 des Körpers 1 verbunden. Die Verbindung kann beispielsweise durch Ultraschall- oder Vibrationsschweißen oder Kleben hergestellt sein. Die Abstandselemente, deren Stärke etwa 1 bis 3 mm ist, können wie im Ausführungsbeispiel nach Figur 1 und 2 zu sehen, quer zum Körper verlaufende Rippen 7 sein, die vorteilhafterweise an den Platten bzw. Schalen 4 angeformt sind. Ebenso können anstelle einer Verbindung die Platten bzw. Schalen 4 am Steg 6 und am Flansch 3 angeformt sein.

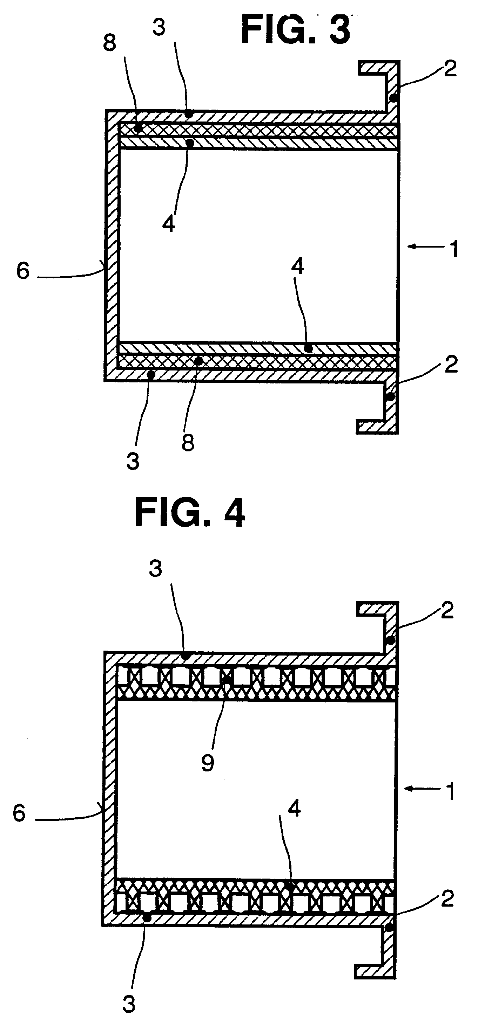

Anstelle der Rippen 7 kann auch eine nachträglich in den Raum zwischen Flansch 3 und Platten bzw. Schalen 4 einzubringende Hartschaum- oder Halbhartschaumschicht 8 vorgesehen werden, wie in der Darstellung von Figur 3 gezeigt. Geeignete Schaummaterialien sind z.B. halbharte bis harte Schäume aus Polyurethan oder Polypropylen.

Eine weitere Ausführungsform der Abstandselemente kann in einem wabenförmigen Materialverband 9 aus beispielsweise den obengenannten Werkstoffen bestehen, der an den Platten bzw. Schalen 4 angeformt und mit dem Flansch 3 durch Ultraschall- oder Vibrationsschweißen oder Kleben verbunden ist (Figur 4).

Durch die vorstehend beschriebenen konstruktiven Maßnahmen kann die Schubsteifigkeit bzw. der Wölbwiderstand und damit die Biegesteifigkeit von Bauteilen deutlich angehoben werden, ohne daß die Masse des Bauteilkörpers erhöht werden muß. Die Erfindung verbindet damit biegesteife Gestaltungsmöglichkeiten mit den Vorteilen der Leichtbauweise.

## Patentansprüche

1. Biegefestes Bauteil aus Kunststoff, bestehend aus einem langgestreckten Körper (1) offenen Querschnittsprofils, dessen Ränder an den die offene Seite des Körpers (1) bildenden Flanschen (3) mit Randversteifungen (2) versehen sind, dadurch gekennzeichnet, daß die Flansche (3) des Körpers (1) in den unter Belastung zu Beulen oder zum Verwölben neigenden Bereichen durch Platten oder Schalen (4) versteift sind, die mittels Abstandselementen (7-9) mit den Flanschen verbunden sind.

2. Biegefestes Bauteil nach Anspruch 1, dadurch gekennzeichnet, daß die Abstandselemente zur Längsausdehnung des Körpers (1) quer verlaufende Rippen (7) sind.

3. Biegefestes Bauteil nach Anspruch 1, dadurch gekennzeichnet, daß die Abstandselemente durch eine Halbhart- bzw. Hartschaumschicht (8) gebildet sind.

4. Biegefestes Bauteil nach Anspruch 1, dadurch gekennzeichnet, daß die Abstandselemente durch einen wabenförmigen Materialverband (9) gebildet sind.

## Claims

1. A flexurally strong plastic component, comprising an elongate structure (1) of open cross-section whose edges are provided with edge stiffening elements (2) at the flanges (3) forming the open side of the structure (1), wherein the flanges (3) of the structure (1) have been stiffened in the areas prone to denting or bulging under stress with plates or shells (4) attached to the flanges by means of spacer elements (7-9).

2. The flexurally strong component of claim 1, wherein the spacer elements are ribs (7) extending transversely to the longitudinal extension of the structure (1).

3. The flexurally strong component of claim 1, wherein the spacer elements take the form of a semirigid or rigid foam layer (8).

4. The flexurally strong component of claim 1, wherein the spacer elements take the form of a honeycomb assembly (9).

## Revendications

1. Elément de construction résistant à la flexion, en matière synthétique, composé d'un corps allongé (1) à profil de section transversale ouvert, dont les bords sont pourvus, sur les rebords (3) formant le côté ouvert du corps (1), de raidissements de bordure (2), caractérisé en ce que les rebords (3) du corps (1) sont rigidifiés dans les zones présentant sous charge une tendance à se voiler ou à se gauchir, au moyen de plaques ou coquilles (4), reliées aux rebords au moyen d'éléments d'écartement (7 à 9).

2. Elément de construction résistant à la flexion selon la revendication 1, caractérisé en ce que les éléments d'écartement sont des nervures (7) s'étendant transversalement par rapport à la direction longitudinale du corps (1).

3. Elément de construction résistant à la flexion selon la revendication 1, caractérisé en ce que les éléments d'écartement sont formés par une couche semi-dure, ou alvéolaire dure (8).

4. Elément de construction résistant à la flexion selon la revendication 1, caractérisé en ce que les éléments d'écartement sont formés au moyen d'un treillis de matériau (9) en nid d'abeilles.
